## Europäisches Patentamt

(19) **European Patent Office**

**Office européen des brevets**

(11) Publication number: **0 002 352**
**B1**

(12) **EUROPEAN PATENT SPECIFICATION**

(45) Date of publication of patent specification: **18.11.81**

(51) Int. Cl.³: **C 08 L 23/16, C 08 L 23/32**

(21) Application number: **78300682.8**

(22) Date of filing: **28.11.78**

(54) An elastomeric composition comprising a free flowing, finely divided powder of a neutralized, sulfonated ethylene propylene terpolymer (EPDM) and a process for preparing the same.

(30) Priority: **29.11.77 US 855764**

(43) Date of publication of application:
**13.06.79 Bulletin 79/12**

(45) Publication of the grant of the European patent:
**18.11.81 Bulletin 81/46**

(84) Designated Contracting States:
**BE DE FR GB NL**

(56) References cited:
**US - A - 2 638 445**
**US - A - 3 642 728**
**US - A - 3 903 027**
**US - A - 3 903 039**
**US - A - 3 974 240**

(73) Proprietor: **Exxon Research and Engineering Company**
**P.O.Box 390 200 Park Avenue**
**Florham Park New Jersey 07932 (US)**

(72) Inventor: **Lundberg, Robert Dean**
**4 Brian Drive**
**Bridgewater New Jersey (US)**
Inventor: **Makowski, Henry Stanislaus**
**2045 Winding Brook Way**
**Scotch Plains New Jersey (US)**
Inventor: **Bock, Jan**
**500 Juniper Lane**
**Bridgewater New Jersey (US)**

(74) Representative: **Field, Roger Norton et al,**
**Hanover Court 5 Hanover Square**
**London W1R OHQ (GB)**

Courier Press, Leamington Spa, England.

An elastomeric composition comprising a free flowing, finely divided powder of a neutralized sulphonated ethylene propylene terpolymer (EPDM) and a process for preparing the same

The present invention relates to a unique form of an elastomer which is a free flowing, finely divided powder of a neutralized sulfonated elastomeric polymer which can be readily dry blended with a plurality of chemical additives into a homogeneous mixture that can be formed into a finished elastomeric article by conventional fabrication processes.

The production of neutralized sulphonated EPDM terpolymers has been described in various patent specifications, for example US Patent Specifications 3642728 and 3974240.

We have now devised certain sulphonated EPDM terpolymers. According to this invention an elastomeric composition comprises a free flowing, finely divided powder of a neutralized, sulfonated EPDM terpolymer, said EPDM terpolymer having a number average molecular weight of 10,000 to 200,000; an ethylene content of 40 to 70 wt.%; a sulfonate content of 10 to 60 meq. sulfonate groups per 100 grams of said terpolymer, said sulfonate group being at least 50% neutralized, wherein said free flowing, finely divided powder of said neutralized sulfonated EPDM terpolymer has an average particle diameter ranging from 0.1 mm to 4 mm, a viscosity at 0.73 sec$^{-1}$ at 200°C of $5 \times 10^3$ to $10^6$ Pa.s and a volume density of 0.24 to 0.64 g/cm$^3$, said powder not agglomerating at ambient temperatures under pressure into a fused mass.

The elastomeric polymers used in the compositions of the present invention are derived from ethylene propylene terpolymer (EPDM) having olefinic unsaturation sites, wherein the polymer preferably has from 0.3 to 10 mole percent olefinic unsaturation. The unsaturation sites can be in the polymer backbone, pendant therefrom or cyclic.

The term "EPDM" is used in the sense of its definition as found in ASTM—D—1418—64 and is intended to mean a terpolymer containing ethylene and propylene in the backbone and a diene for unsaturation. Illustrative methods for producing those terpolymers are found in U.S. Patent 3,280,082, British Patent 1,030,289 and French Patent 1,386,600. The preferred terpolymers contain 45 to 65 wt.% ethylene and 2 to 10 wt.% of a diene monomer, the balance of the polymer being propylene. Preferably, the polymer contains less than 60 wt.% e.g. 50 to 60 wt.% ethylene, e.g. 50 wt.% and 2.6 to 9.0 wt.% diene monomer, e.g. 5.0 wt.%. The diene monomer is preferably a nonconjugated diene. The $\overline{M}n$ of the terpolymer is 10,000 to 200,000; preferably 15,000 to 100,000; and more preferably 20,000 to 60,000. The Mooney viscosity (ML, 1 + 8, 100°C, 212°F) of the terpolymer is preferably 5 to 60, more preferably 10 to 50 and most preferably 20 to 50; e.g. 40. The $\overline{M}v$ of the EPDM is preferably below 350,000 and more preferably below 300,000; e.g. 270,000. The $\overline{M}w$ of the EPDM.is preferably below 500,000 and more preferably below 350,000; e.g. 343,000.

Illustrative of these nonconjugated diene monomers which may be used in the EPDM terpolymer are 1,4-hexadiene, dicyclopentadiene, 5-ethylidene-2-norbornene, 5-methylene-2-norbornene, 5-propenyl-2-norbornene and methyl tetrahydroindene. A typical EPDM is Vistalon 2504 (Exxon Chemical Co.) a terpolymer having a Mooney viscosity (ML, 1 + 8, 100°C) of 40 and having 50 wt.% of ethylene, 45 wt.% of propylene and 5.0 wt.% of 5-ethylidene-2-norbornene with an $\overline{M}n$ of 27,000, an $\overline{M}v$ of 145,000 and an $\overline{M}w$ of 174,000. (The word 'Vistalon' is a registered Trade Mark at least in the United Kingdom).

EPDM terpolymers having above 70 wt.% of ethylene are not contemplated by the present invention. These terpolymers having a moderate to high degree of crystallinity can be readily pulverized into a powder form without massive agglomeration at ambient temperatures. However, the resulting crystallinity of these high ethylene content EPDM terpolymers results in changes in physical properties such as tensile strength, hardness, set properties and useful oil extension levels, thereby making them undesirable for a plurality of intended applications. Unsulphonated EPDM terpolymers with ethylene contents below 70 wt.% cannot be pulverized without a significant tendency to agglomerate at ambient or moderately elevated temperatures. When this agglomeration occurs, depending on the size of the agglomerated mass, the compounder faces at minimum a major inconvenience to the ultimate possibility of a completely unusable material.

Vistalon 3708 (Exxon Chemical Co.) is a terpolymer having a Mooney viscosity (ML, 1 + 8, 126.7°C) of 45—55 and having 65 wt.% of ethylene, 3.3 wt.% of 5-ethylidene-2-norbornene; and 32.7 wt.% of propylene with an $\overline{M}n$ of 53,000; an $\overline{M}w$ of 343,000; and an $\overline{M}v$ of 270,000.

Vistalon 6505 (Exxon Chemical Co.) is a terpolymer having a Mooney viscosity (ML, 1 + 8, 126.7°C) of 45—55 and having 53 wt.% of ethylene, 9.0 wt.% of 5-ethylidene-2-norbornene and 38 wt.% of propylene.

Nordel 1320 (DuPont) is another EPDM terpolymer having a Mooney viscosity (ML, 1 + 8, 100°C) of 15 and having 53 wt.% of ethylene, 3.5 wt.% of 1,4-hexadiene, and 43.5 wt.% of propylene. (The word 'Nordel' is a registered Trade Mark at least in the United Kingdom).

In carrying out the present invention, the EPDM may for example be sulfonated with a sulfonating agent selected from acetyl sulfate, preformed or generated in situ from acetic anhydride and concentrated sulfuric acid, an acyl sulfate, or a sulfur trioxide donor complexed with a Lewis base containing oxygen, nitrogen or phosphorus.

It should be pointed out that neither the sulfonating agent nor the manner of sulfonation is critical, provided that the sulfonating method does not degrade the polymer backbone.

In the practice of this invention, the polymer to be sulfonated is dissolved in a suitable solvent and reacted with the sulfonating agent. The solvent medium must be a neutral one for the rubber and the sulfonating agent. The solvent is preferably an aromatic hydrocarbon, an aliphatic hydrocarbon, or a halogenated aromatic hydrocarbon. Illustrative of these solvents are: isopentane, pentane, cyclohexane, isohexane, hexane, heptane and homologues thereof, benzene, toluene, chlorobenzene or xylene. The preferred solvent is an aliphatic hydrocarbon.

Sulfonation of the polymer is conducted at a temperature between $-100°$ and $+100°C$ and sulfonation occurs when the sulfonating agent is added to the polymer solution. The sulfonating agent is preferably dissolved in a suitable solvent, or may be added directly without solvent. Reaction time may be 5 minutes to 60 minutes, more preferably about 30 minutes, wherein the product remains soluble throughout the reaction period.

The sulfonated elastomeric is quenched with a liquid aliphatic alcohol such as methanol, ethanol or isopropanol, an aromatic hydroxyl compound such as phenol, or water.

The amount of desirable sulfonation depends on the particular application. The elastomeric polymer is sulfonated at 10 to 60 meq. sulfonate groups/100 grams of polymer, preferably at 10 to 50 meq. sulfonate groups/100 grams of polymer, and more preferably at 20 to 40 meq. sulfonate groups/100 grams of polymer. The meq. of sulfonate groups/100 grams of polymer was determined by dissolving the sulfonated polymer in a mixed solvent of 95 parts by volume of toluene and 5 parts by volume of methanol at a concentration level of 50 grams per liter of solvent. The sulfonated polymer is titrated with sodium hydroxide in ethanol to an Alizarin Thymolphthalein endpoint. Sulfur analysis was determined by Dietert Analysis.

Polymers containing unsaturation and sulfonate groups have been found to be somewhat deficient in thermo-stability. Therefore, it is desirable to neutralize at least a portion of the sulfonate groups as part of the manufacturing of sulfonated elastomeric polymer. Neutralization further improves the physical properties of the sulfonated polymer.

In preparing the ionomer it is not necessary but desirable to neutralize every sulfonate group. At least 50% of the sulfonate groups are neutralized, preferably at least 90% of the sulfonate groups are neutralized; more preferably the sulfonate groups are 100% neutralized.

The neutralizing agents which are used may be metallic salts of carboxylic acids, wherein the metal is a metal of Groups I—A, II—A, I—B or II—B of the Periodic Table of Elements, iron, antimony, lead or a mixture thereof. The Periodic Table is that of the I.U.P.A.C. revision, 1965.

The carboxylate ion of the metallic salt is derived from the following carboxylic acids, however, other carboxylic acids can be readily employed. These carboxylic acids are: acetic, benzoic, lauric, palmitic, myristic, decanoic, octanoic and stearic.

Other neutralizing agents are metallic oxides, wherein the metallic ion is a metal of Groups II—A or II—B of the Periodic Table of Elements lead or a mixture thereof. Metallic hydroxides can also be employed wherein the metallic ion is a metal of Groups I—A or II—A.

The neutralizing agent is added to the solution of the sulfonated elastomeric polymer to form the neutralized sulfonated elastomeric polymer.

To the neutralized sulfonated elastomeric polymer in solution can be added a preferential plasticizer which may have a melting point of at least 25°C and may be a carboxylic acid or metal salt of a carboxylic acid, wherein the metal ion of the metal salt of the carboxylic acid is a metal of Groups I—A, II—A, I—B or II—B of the Periodic Table of Elements, iron, lead or antimony or a mixture thereof, e.g. zinc stearate. (Preferential plasticizer is a plasticizer which plasticizes only the ionic groups and not the hydrocarbon backbone of the polymer). The preferential plasticizer is incorporated into the neutralized sulfonated EPDM terpolymer at 0 to 60 parts by weight per 100 parts of the sulfonated polymer, more preferably at 5 to 50 and most preferably at 10 to 40. Alternatively, other preferential plasticizers are selected from organic esters, alcohols, phosphates, amines, amides or ureas and mixtures thereof. The neutralized sulfonated elastomeric polymer with preferential plasticizer is isolated as a crumb form from the solution by conventional steam stripping or filtration.

The neutralizing agent and preferential plasticizer can be the identical chemical species, when it is a metallic salt of a carboxylic acid. In this case, when plasticization is required, additional metallic salt is added over the required levels of neutralization.

The dried crumb of the neutralized sulfonated unplasticized elastomeric polymer has a viscosity at 0.73 sec$^{-1}$ at 200°C of $5 \times 10^3$ to $1 \times 10^6$ Pa.s, preferably $2 \times 10^4$ to $5 \times 10^5$ and more preferably $5 \times 10^4$ to $5 \times 10^5$ Pa.s.

One approach to preparing the powder of a neutralized sulfonated EPDM is that of cryogenic grinding. The dried crumb form of the neutralized sulfonated elastomeric polymer is cooled to a low temperature preferably below its glass transition point by placing the neutralized sulfonated elastomeric polymer in a cryogenic cooling unit or cooling with dry ice. The cooled neutralized sulfonated elastomeric polymer is pulverized into the free flowing, finely divided powder by conventional equipment such as grinder, ball milling, granulator, high speed knife blades and other procedures. This finely divided powder does not agglomerate or block under pressure into a fused mass, even when

**0 002 352**

stored in containers for prolonged periods of time at ambient temperature. The diameters of the particles of the free flowing, finely divided powder are 0.1 to 4 mm; more preferably 0.3 to 2 mm; and most preferably 0.5 mm to 1.5 mm. The volume density of the powder is 15 lbs/cu ft to 40 lbs/cu ft, (0.24 to 0.64 g/cm³).

The powder can be dry blended with a plurality of chemical additives into a free flowing homogeneous mixture. The conventional blending techniques of the present invention are: high speed mixers such as a Henschel; a ribbon blender; a conical blender; a drum tumbler; or even mixing by hand.

The powder of the neutralized sulfonated elastomeric polymer or the blends of the neutralized sulfonated elastomeric polymer can be fabricated into finished elastomeric articles by subjecting them to sufficient heat, at least 75°C to 250°C, to cause the material to fuse into a coherent high strength elastomeric composition. These formulations can be readily extruded, injection molded, rotationally cast, employed as coatings and subjected to the conventional fabrication processes historically limited to polyvinyl chloride technology.

The chemical additives used in the formulation of homogeneous mixtures with the powder of the neutralized sulfonated elastomeric polymer are one of the following: fillers, non-polar backbone process oils, metallic oxides, lubricants, or polyolefinic thermoplastics, or a mixture thereof. Both inorganic and organic pigments are considered to be within the scope of the definition of fillers.

These chemical additives are blended with the powder of the neutralized sulfonated elastomeric polymer at a concentration level of less than 500, e.g. 10 to 500 parts by weight per 100 parts of the sulfonated polymer; more preferably at 50 to 300 and most preferably at 75 to 200.

The fillers which may be employed in the present invention are preferably carbon black, aluminosilicates, talcs, calcium silicate, ground calcium carbonate, water precipitated calcium carbonate, magnesium silicate, or delaminated, calcined or hydrated clays or mixtures thereof. Examples of carbon black are lamp, channel, furnace or acetylenic blacks.

The fillers are incorporated into the composition at a concentration level of less than 400 parts by weight per 100 parts of the sulfonated polymer, preferably at 50 to 200 and more preferably at 50 to 150.

Typically, these fillers have a particle size of 0.03 to 15 microns, more preferably 0.5 to 10, and most preferably 2 to 10. The oil absorption of the filler as measured by grams of oil absorbed by 100 grams of filler is preferably 10 to 120, more preferably 10 to 50, and most preferably 10 to 30. Typical fillers employed in this present invention are illustrated in Table I.

TABLE I

| Filler | Code No | Oil Absorption grams of oil/100 grams of filler | Specific Gravity | Avg. Particle Size Micron | pH |
|---|---|---|---|---|---|
| Calcium carbonate ground | Atomite | 15 | 2.71 | | 9.3 |
| Calcium carbonate precipitated | Purecal U | 35 | 2.65 | .03—.04 | 9.3 |
| Delaminated clay | Polyfil DL | 30 | 2.61 | 4.5 | 6.5—7.5 |
| Hydrated clay | Suprex | — | 2.6 | 2 | 4.0 |
| Calcined clay | Icecap K | 50—55 | 2.63 | 1 | 5.0—6.0 |
| Magnesium silicate (talc) | Mistron Vapor | 60—70 | 2.75 | 2 | 9.0—9.5 |
| Calcium silicate | — | 120 | 2.1 | .03 | 10.0 |

(The word 'Mistron' is a registered Trade Mark at least in the United Kingdom).

The lubricants employed in the present invention are selected from polyolefinics, paraffinic, aromatics or naphthenic waxes e.g. crystalline hydrocarbon waxes. In particular, the waxes employed in this present invention have a softening point of 135°F to 220°F (57°C to 104°C), more preferably 135°F to 200°F (57 to 93°C), and most preferably 150°F to 200°F (66°C to 93°C). The preferred waxes have less than 2 wt.% of polar-type compounds and an $\overline{M}n$ of 1000 to 4,000, more preferably 1500 to 3000. The waxes contemplated for use in this present invention can be synthetic, petroleum, or natural waxes.

The lubricants are incorporated at a concentration level of 0 to 30 parts by weight per 100 parts of the sulfonated polymer, more preferably at 1 to 25, and most preferably at 5 to 20. Some of these typical waxes are illustrated in Table II.

4

# 0 002 352

## TABLE II

### TYPICAL PROPERTIES OF PARAFFIN WAX IN DIFFERENT MELTING POINT RANGES

| | A[a] | B[b] | C[c] | D[d] | E[e] |
|---|---|---|---|---|---|
| Melting Point, °C (ASTM—D—87) | 51—53 | 54—56 | 56—58 | 60—62 | 67—71 |
| Oil Content, % (ASTM—D—721) | 0.1—0.4 | 0.1—0.3 | 0.1—0.2 | 0.1—0.2 | 0.2—0.5 |
| Hardness (Penetration) at 25°C (77°F) (ASTM—D—1321) | 14—20 | 12—15 | 10—14 | 9—14 | 9—18 |
| Hardness (Penetration) at 38°C (100°F) (ASTM—D—1321) | 80—200 | 50—100 | 40—60 | 20—40 | 13—38 |
| Saybolt Viscosity at 99°C (210°F, SUS) (ASTM—D—88) | 37—39 | 37—39 | 38—40 | 40—42 | 45—53 |
| Kinematic Viscosity at 99°C (210°F), $m^2s^{-1}(\times 10^6)$ (ASTM—D—445) | 3.2—3.8 | 3.2—3.8 | 3.6—3.9 | 4.1—4.9 | 5.57—8.2 |

a Includes Atlantic Wax 151, Essowax 2530, Gulfwax 27, Mobilwax 128/130, Shellwax 100, Sunoco Wax 3425.
b Includes Aristowax 130/134, Atlantic Wax 171, Boron Wax 133/135, Essowax 3050, Shellwax 120, Sunoco Wax 3422.
c Includes Boron Wax 138/140, Eskar Wax R—35, Essowax 3250, Mobil Wax 138/140, Sinclair Wax 133, Sunoco Wax 3420.
d Includes Atlantic Wax 1115, Essowax 4030, Gulfwax 40, Pacemaker Wax 45, Sinclair Wax 141, Shellwax 270.
e Includes Aristowax 165, Essowax 5250, Shellwax 300, Sunoco Wax 5512.

(The words 'Essowax', 'Mobilwax' and 'Sunoco' are registered Trade Marks, at least in the United Kingdom).

Zinc oxide can be incorporated into the blend as a whitening pigment as well as a means for improving the ionic bonding force between the sulfonate groups in the sulfonated terpolymer. The zinc oxide is incorporated into the blend composition at a concentration level of 0 to 25 parts by weight per 100 parts of the sulfonated polymer, more preferably 0 to 15. Alternatively, a Rutile or Anatase titanium dioxide can be employed as a whitening pigment.

The oils employed in the present invention are non-polar backbone process oils having less than 2 wt.% polar-type compounds as measured by molecular-type clay gel analysis. These oils are selected from paraffinics ASTM Type 104B, as defined in ASTM—D—2226—70, aromatics ASTM Type 102 or naphthenics ASTM Type 104A, wherein the oil has a flash point by the Cleveland open cup of at least 350°F (177°C), a pour point of less than 40°F (4.4°C), a viscosity of 70 to 3000 ssu's and a number average molecular weight of at least 300 e.g. 300 to 1000, more preferably 400 to 750. The preferred process oils are paraffinics. Table III illustrates typical oils encompassed by the scope of the invention.

## TABLE III

| Type Oil | Oil Code No | Viscosity sus | $M_n$ | % Polars | % Aromatic | % Saturates |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Aromatic | Flexon 340 | 120 | — | 1.3 | 70.3 | 28.4 |
| Naphthenic | Flexon 765 | 505 | — | 0.9 | 20.8 | 78.3 |

(The word 'Flexon' is a registered Trade Mark, at least in the United Kingdom).

5

The oils are incorporated into the composition at a concentration level of 0 to 100 parts by weight per 100 parts of the sulfonated polymer, more preferably at 25 to 90, and most preferably at 25 to 80.

The amount of oil which can be incorporated into these systems is somewhat limited without losing the desirable characteristics of a free flowing dry blended composition. The actual amount of oil which can be tolerated is dependent on a number of characteristics of the entire mix such as the amount, type, and particle size of the filler employed, the particular EPDM employed, the sulfonation content, the plasticizer type and level employed, and the temperature to which the mixture is exposed. If too much oil is added, the resultant composition becomes too soft and will tend to agglomerate. Therefore, it is preferred to employ moderate levels of oil during the dry blending process (less than 90 parts per 100 parts of sulfonated EPDM gum). If more oil is desired, this can be incorporated directly in the gum prior to the granulation process thereby circumventing the aforementioned limitation.

A crystalline polyolefinic thermoplastic can be incorporated into the blend composition in minor proportions as a means for modification of the rheological properties of the blend compositions as well as the hardness and abrasion resistance of the rubberized footwear sole. The crystalline polyolefinic thermoplastic is preferably polyethylene having a melt index of at least 6, a homopolymer or copolymer of propylene having a melt flow of at least 10, an ethylene-propylene copolymers or a mixture thereof. These polymers are characterised as having a degree of crystallinity of at least 25 percent, preferably at least forty percent. The crystalline polyolefinic thermoplastic has a number average molecular weight of at least 5,000 to 250,000 and more preferably of at least 10,000 to 150,000.

The polyolefinic thermoplastic is incorporated into the composition at a concentration level of 0 to 90 parts by weight per 100 parts of the sulfonated polymer; more preferably 5 to 50; and most preferably 5 to 20.

A metallic hydroxide can be incorporated into the blend composition as a means of neutralizing any residual free stearic acid in the neutralized sulfonated terpolymer. The metallic hydroxide is incorporated at a concentration level of about less than 2.0 wt.%, wherein the metal ion of the metallic hydroxide is selected from Group II—A of the Periodic Table of Elements such as barium, calcium or magnesium.

The advantages of the present process in the formation of a free flowing, finely divided powder of a neutralized sulfonated elastomeric polymer can be more readily appreciated by reference to the following examples. Unless otherwise specified, all measurements are in parts per hundred by weight.

### Example 1

Vistalon 2504, a commercial EPDM with a Mooney viscosity (ML, 1 + 8, 100°C) of 40 was depolymerized in a hot extruder to a Mooney viscosity of about 20. To a solution of 500 grams of the 20 Mooney Vistalon 2504 in 5000 ml of hexane at room temperature was added 304 mmoles of acetic anhydride followed by 187.5 mmoles of concentrated sulfuric acid. After 30 minutes, the sulfonation was quenched with 750 ml of isopropanol. Stearic acid (0.5 mole) was added and, after solution was achieved, the sulfonated cement was neutralized with a solution of 0.225 mole of zinc stearate in 125 ml water. Antioxidant 2246 (2.5 g) was added and the cement stirred for 30 minutes. The acid form of the sulfonated EPDM terpolymer contained 33 meq. $SO_3H$ groups/100 grams of EPDM. The cement was steam stripped to isolate a polymer crumb which was subsequently dried. The average diameter of the crumbs was about 10 mm to 12.7 mm (about 0.4 to about 0.5 inches). The crumb was then cooled with dry ice to a temperature ranging from 0°C to −78°C. Alternatively, the crumb was placed in a cryogenic unit to effect cooling. The cooled crumb was pulverized in a Cumberland grinder. The resultant free flowing finely divided powder did not agglomerate or block, when packaged and contained under load (estimated at 0.35 to 0.70 $kg/cm^2$) for 30 days at ambient temperature. The average diameter of the particles of the powder was about 1 mm and had a range of about 0.3 to about 4.0 mm. The volume density of this powder was about 0.32 $g/cm^3$.

### Comparative Example

An EPDM containing about 50% ethylene, 45% propylene and 5% 5-ethylidene-2-norbornene monomer was cooled below 0°C and pulverized into a powder. This powder coalesced into a fused mass within ten minutes at ambient temperatures. Dicing this unsulfonated EPDM into 12.7 mm squares resulted in a product which coalesced in two hours. This result clearly contrasts with the behavior of the polymer in Example 1 and is generally characteristic of EPDM polymers of moderate molecular weight and little or no crystallinity.

### Example 2

The following formula expressed in parts per hundred by weight was prepared from the free flowing, finely divided powder of the neutralized sulfonated EPDM 2504 terpolymer of Example 1.

| | Parts Per Hundred By Weight |
|---|---|
| Sulfonated EPDM 2504 terpolymer (Powder) | 100.0 |
| Purecal U mineral filler | 67.0 |
| Icecap K mineral filler | 48.0 |
| Zinc oxide | 5.0 |
| Magnesium hydroxide | 2.0 |
| Irganox 1010 stabilizer (Ciba Geigy) | 0.5 |
| Process oil Sunpar 2280 | 63.0 |
| Paraffin wax (m.p. 65.6°C) | 10.0 |

(The word 'Irganox' is a registered Trade Mark, at least in the United Kingdom).

The fillers, oil and wax were combined and mixed by hand until a uniform yellow powder was obtained. The powdered sulfonated EPDM terpolymer was mixed by hand with the yellow powder and the mixture was agitated on a rotating mill until a homogeneous mixture had been realized. The resultant blend powder was compression molded at 350°F (177°C) (3 minutes preheat, 4 minutes at 20 ton/sq. in. pressure — 3147 kg/cm²) and cooled under pressure. The resultant pad was flexible, non tacky, and elastomeric.

The following shows rheological data obtained in a capillary rheometer at 200°F (93°C).

| Shear Rate sec$^{-1}$ | Apparent Viscosity Pa.s |
|---|---|
| 0.88 | 36,280 |
| 29.0 | 3,690 |
| 147.0 | 1,230 |
| 1470.0 | 240 |

The extruded strands from the rheometer were tough and elastomeric. This example demonstrates that the dry blended material can be fused, and extruded under conditions of varying shear.

Example 3

A dry blend of neutralized sulfonated EPDM was prepared as described below. A free flowing powder was prepared via granulation of a coarse crumb of Sulfo EPDM in a suitable granulator. The Sulfo EPDM was prepared as described in Example 1. The resulting coarse powder was approximately 1/2 to 1 mm in diameter and showed no tendency to agglomerate. Using a suitable high intensity mixer (a Prodex Henschel or Welex Papermixer of the appropriate size which are commercially available mixers) the following ingredients were charged to the vessel:

100 parts of plasticized neutralized sulfonated EPDM described in Example 1.

40 parts of calcium carbonate filler (Purecal U).

24 parts of zinc oxide.

The filler package and Sulfo EPDM gum were mixed for 3—5 minutes at a temperature up to 50°C. The material remained well dispersed. At this point 40 parts of rubber process oil (Sunpar 2280) were added to the mixture over a period of 2 minutes. The mixing was continued for about 5 more minutes and the free flowing dry blend was discharged. The temperature was maintained so that it did not go above about 80°C. The powder could then be stored without agglomeration or could be injection molded directly into a strong rubbery article.

# 0 002 352

**Claims**

1. An elastomeric composition comprising a free flowing, finely divided powder of a neutralized, sulfonated EPDM terpolymer, said EPDM terpolymer having a number average molecular weight of 10,000 to 200,000; an ethylene content of 40 to 70 wt.%; a sulfonate content of 10 to 60 meq. sulfonate groups per 100 grams of said terpolymer, said sulfonate group being at least 50% neutralized, wherein said free flowing, finely divided powder of said neutralized sulfonated EPDM terpolymer has an average particle diameter ranging from 0.1 mm to 4 mm, a viscosity at 0.73 sec$^{-1}$ at 200°C of $5 \times 10^3$ to $10^6$ Pa.s and a volume density of 0.24 to 0.64 g/cm$^3$ said powder not agglomerating at ambient temperatures under pressure into a fused mass.

2 A composition according to claim 1, further including a preferential plasticizer at a concentration level of 5 to 50 parts by weight based on 100 parts of said neutralized, sulfonated elastomeric polymer.

3. A composition according to claim 2, wherein said preferential plasticizer has a melting point of at least 25°C and is a carboxylic acid, a metallic salt of carboxylic acid or a mixture thereof.

4. A composition according to claim 3, wherein said preferential plasticizer is zinc stearate.

5. A composition according to any one of the preceding claims wherein at least 90% of said sulfonate groups are neutralized with a metal cation which is antimony, iron, lead, a metal of Groups I—A, II—A, I—B, or II—B of the Periodic Table of Elements or a mixture thereof.

6. A composition according to any one of the preceding claims, wherein said EPDM terpolymer has less than 60 wt.% ethylene.

7. A composition according to any one of the preceding claims which includes at least one additive blended with said finely divided powder at a concentration of less than 500 parts by weight per 100 parts by weight of sulphonated polymer, thereby forming a homogeneous mixture.

8. A composition according to claim 7, wherein said additive is a filler, a non-polar backbone process oil having less than 2 wt.% polar compounds, a polyolefinic thermoplastic, or a lubricant or a mixture thereof, the filler being in a concentration of less than 400 parts by weight per 100 parts by weight of sulphonated polymer, the process oil being a paraffinics ASTM Type 104B, aromatics ASTM Type 102 or naphthenics ASTM Type 104A wherein the oil has a flash point by the Cleveland open cup of at least 177°C, a pour point of less than 4.4°C, a viscosity of 70 to 3000 sus's and a number average molecular weight of at least 300 and the process oil being in a concentration of up to 100 parts by weight per 100 parts by weight of sulphonated polymer, the polyolefinic thermoplastic having a degree of crystallinity of at least 25 percent and a number average molecular weight of 5000 to 250,000 and being in a concentration of up to 90 parts by weight per 100 parts by weight of sulphonated polymer and the lubricant being a polyolefinic, paraffinic, aromatic or naphthenic wax and being in a concentration of up to 30 parts by weight per 100 parts by weight of sulphonated polymer.

9. A composition according to claim 8, wherein said polyolefinic thermoplastic is polyethylene having a melt index of at least 6 or polypropylene having a melt flow of at least 10.

10. A composition according to claim 8, wherein said lubricant is a crystalline hydrocarbon wax having a melting point of 135°F (57°C) to 220°F (104°C) and an $\overline{Mn}$ of 1000 to 4000.

11. A composition according to claim 8, wherein said filler has a particle size of 0.03 to 15 microns and is carbon black, aluminium silicate, talc, calcium silicate, calcium carbonate or magnesium silicate or a mixture thereof.

12. A process for preparing the composition according to any one of the preceding claims in which the powder is formed by cryogenic grinding.

13. A process according to claim 12, wherein the composition is formed into an elastomeric article.

**Revendications**

1. Composition élastomérique comprenant une poudre finement divisée, s'écoulant librement, d'un terpolymère EPDM sulfoné neutralisé, ce terpolymère EPDM ayant une moyenne en nombre du poids moléculaire de 10 000 à 200 000; une teneur en éthylène de 40 à 70% en poids; une teneur en sulfonate de 10 à 60 meq de groupes sulfonate par 100 g dudit terpolymère, le groupe sulfonate étant neutralisé au moins à 50%, la poudre finement divisée, s'écoulant librement, dudit terpolymère d'EPDM sulfoné neutralisé ayant un diamètre moyen de particules de 0,1 mm à 4 mm, une viscosité à 0,73 s$^{-1}$ à 200°C de $5 \times 10^3$ à $10^6$ Pa.s et une densité volumique de 0,24 à 0,64 g/cm$^3$, ladite poudre ne s'agglomérant pas aux températures ambiantes sous pression en une masse soudée.

2. Composition suivant la revendication 1, comprenant en outre un plastifiant préférentiel à une concentration de 5 à 50 parties en poids sur la base de 100 parties dudit polymère élastomérique sulfoné neutralisé.

3. Composition suivant la revendication 2, dans laquelle le plastifiant préférentiel a un point de fusion d'au moins 25°C et est un acide carboxylique, un sel métallique dudit acide carboxylique ou leur mélange.

8

# 0 002 352

4. Composition suivant la revendication 3, dans laquelle le plastifiant préférentiel est le stéarate de zinc.

5. Composition suivant l'une quelconque des revendications précédentes, dans laquelle au moins 90% des groupes sulfonate sont neutralisés avec un cation métallique qui est l'antimoine, le fer, le plomb, un métal des Groupes I—A, II—A, I—B ou II—B du Tableau Périodique des Eléments ou leur mélange.

6. Composition suivant l'une quelconque des revendications précédentes, dans laquelle le terpolymère EPDM contient moins de 60% en poids d'éthylène.

7. Composition suivant l'une quelconque des revendications précédentes, qui comprend au moins un additif en mélange avec ladite poudre finement divisée à une concentration de moins de 500 parties en poids pour 100 parties en poids de polymère sulfoné, formant ainsi un mélange homogène.

8. Composition suivant la revendication 7, dans laquelle l'additif est une charge, une huile ramollissante à chaîne dorsale non polaire ayant moins de 2% en poids de composés polaires, une matière thermoplastique polyoléfinique ou un lubrifiant ou leur mélange, la charge étant présente à une concentration de moins de 400 parties en poids pour 100 parties en poids de polymère sulfoné, l'huile ramollissante étant une huile paraffinique ASTM type 104B, aromatique ASTM type 102 ou naphténique ASTM type 104A, cette huile ayant un point d'éclair, déterminé en coupelle ouverte de Cleveland, d'au moins 177°C, un point d'écoulement de moins de 4,4°C, une viscosité de 70 à 3000 SUS et une moyenne en nombre du poids moléculaire d'aun moins 300 et l'huile ramollissante étant présente à une concentration allant jusqu'à 100 parties en poids pour 100 parties en poids de polymère sulfoné, la matière thermoplastique polyoléfinique ayant un degré de cristallinité d'au moins 25% et une moyenne en nombre du poids moléculaire de 5000 à 250 000 et étant présente à une concentration allant jusqu'à 90 parties en poids pour 100 parties en poids de polymère sulfoné et le lubrifiant étant une cire polyoléfinique, paraffinique, aromatique ou naphténique et étant présent à une concentration allant jusqu'à 30 parties en poids pour 100 parties en poids de polymère sulfoné.

9. Composition suivant la revendication 8, dans laquelle la matière thermoplastique polyoléfinique est un polyéthylène ayant un indice de fusion d'aun moins 6 ou un polypropylène ayant un écoulement à l'état fondu d'au moins 10.

10. Composition suivant la revendication 8, dans laquelle le lubrifiant est une cire hydrocarbonée cristalline ayant un point de fusion de 135°F (57°C) à 220°F (104°C) et une valeur $\overline{M}n$ de 1000 à 4000.

11. Composition suivant la revendication 8, dans laquelle la charge a un diamètre de particules de 0,03 à 15 micromètres et est du noir de carbone, du silicate d'aluminium, du talc, du silicate de calcium, du carbonate de calcium ou du silicate de magnésium ou leur mélange.

12. Procédé de préparation de la composition suivant l'une quelconque des revendications précédentes, dans lequel la poudre est formée par broyage cryogénique.

13. Procédé suivant la revendication 12, dans lequel la composition est façonnée en un article élastomérique.

## Patentansprüche

1. Elastomere Zusammensetzung in Form eines freifließenden feinteiligen Pulvers eines neutralisierten, sulfonierten EPDM-Terpolymers, das ein zahlenmäßiges durchschnittliches Molekulargewicht von 10000 bis 200000, einen Ethylengehalt von 40 bis 70 Gew.% und einen Sulfonatgehalt von 10 bis 60 Milliäquivalenten Sulfonatgruppen, die zu zumindest 50% neutralisiert sind, je 100 g Terpolymer aufweist, wobei das freifließende, feinteilige Pulver des neutralisierten, sulfonierten EPDM-Terpolymers einen durchschnittlichen Teilchendurchmesser von 0,1 bis 4 mm, eine Viskosität bei 0,73 sec.$^{-1}$ und 200°C von $5 \times 10^3$ bis $10^6$ Pa · s und eine Volumendichte von 0,24 bis 0,64 g/cm$^3$ besitzt und bei Raumtemperaturen unter Druck nicht zu einem Schmelzfluß agglomeriert.

2. Zusammensetzung nach Anspruch 1, dadurch gekennzeichnet, daß sie bezogen auf 100 Teile des neutralisierten, sulfonierten elastomeren Polymers 5 bis 50 Gewichtsteile eines bevorzugten Weichmachers enthält.

3. Zusammensetzung nach Anspruch 2, dadurch gekennzeichnet, daß der bevorzugte Weichmacher einen Schmelzpunkt von mindestens 25°C aufweist und eine Carbonsäure, ein Metallsalz der Carbonsäure oder eine Mischung derselben ist.

4. Zusammensetzung nach Anspruch 3, dadurch gekennzeichnet, daß der bevorzugte Weichmacher Zinkstearat ist.

5. Zusammensetzung nach Anspruch 1 bis 4, dadurch gekennzeichnet, daß mindestens 90% der Sulfonatgruppen mit einem Metallkation, das Antimon, Eisen, Blei, ein Metall der Gruppen I—A, II—A, I—B oder II—B des periodischen Systems der Elemente oder eine Mischung derselben ist, neutralisiert sind.

6. Zusammensetzung nach Anspruch 1 bis 5, dadurch gekennzeichnet, daß das EPDM-Terpolymer weniger als 60 Gew.% Ethylen enthält.

7. Zusammensetzung nach Anspruch 1 bis 6, dadurch gekennzeichnet, daß sie mindestens ein mit dem feinteiligen Pulver unter Bildung einer homogenen Mischung vermischtes Additiv in einer Menge von weniger als 500 Gewichtsteilen je 100 Gewichtsteile des sulfonierten Polymers enthält.

8. Zusammensetzung nach Anspruch 7, dadurch gekennzeichnet, daß das Additiv ein Füllstoff, ein Prozeßöl mit nicht polarem Molekülgerüst und einem Gehalt von weniger als 2 Gew.% polaren Verbindungen, ein polyolefinischer Thermoplast oder ein Schmiermittel oder eine Mischung derselben ist, wobei der Füllstoff in einer Konzentration von weniger als 400 Gewichtsteilen je 100 Gewichtsteile sulfoniertes Polymer vorliegt, das Prozeßöl ein Paraffinöl vom ASTM-Typ 104 B, ein aromatisches Öl vom ASTM-Typ 102 oder ein naphthenisches Öl vom ASTM-Typ 104 A mit einem Flammpunkt (Cleveland open cup) von mindestens 177°C, einem Fließpunkt von weniger als 4,4°C, einer Viskosität von 70 bis 3000 sus und einem zahlenmäßigen durchschnittlichen Molekulargewicht von mindestens 300 ist und in einer Menge bis zu 100 Gewichtsteilen je 100 Gewichtsteile sulfoniertes Polymer vorliegt, der polyolefinische Thermoplast einen Kristallinitätsgrad von mindestens 25% und ein zahlenmäßiges durchschnittliches Molekulargewicht von 5000 bis 250000 aufweist und in einer Menge von bis zu 90 Gewichtsteilen je 100 Gewichtsteile sulfoniertes Polymer vorliegt und das Schmiermittel ein polyolefinisches, paraffinisches, aromatisches oder naphthenisches Wachs ist und in einer Menge von bis zu 30 Gewichtsteilen je 100 Gewichtsteile sulfoniertes Polymer vorliegt.

9. Zusammensetzung nach Anspruch 8, dadurch gekennzeichnet, daß der polyolefinische Thermoplast Polyethylen mit einem Schmelzindex von mindestens 6 oder Polypropylen mit einem Schmelzfluß von mindestens 10 ist.

10. Zusammensetzung nach Anspruch 8, dadurch gekennzeichnet, daß das Schmiermittel ein kristallines Kohlenwasserstoffwachs mit einem Schmelzpunkt von 57 bis 104°C (135—220°F) und einem zahlenmäßigen durchschnittlichen Molekulargewicht $\overline{M}n$ von 1000 bis 4000 ist.

11. Zusammensetzung nach Anspruch 8, dadurch gekennzeichnet, daß der Füllstoff eine Teilchengröße von 0,03 bis 15 $\mu$m besitzt und Ruß, Aluminiumsilikat, Talk, Calciumsilikat, Calciumcarbonat oder Magnesiumsilikat oder eine Mischung derselben ist.

12. Verfahren zur Herstellung der Zusammensetzung gemäß den Ansprüchen 1 bis 11, dadurch gekennzeichnet, daß das Pulver durch Tieftemperaturmahlung hergestellt wird.

13. Verfahren nach Anspruch 12, dadurch gekennzeichnet, daß die Zusammensetzung zu einem elastomeren Artikel geformt wird.